# EUROPEAN PATENT APPLICATION

(11) **EP 4 238 824 A1**
(43) Date of publication of application: **06.09.2023**
(21) Application number: 21885407.3
(22) Date of filing: 14.09.2021
(51) Int. Cl.: B60P 3/35, B60P 3/37, B60R 15/04

(54) **ADAPTED FLOAT-VEHICLE FOR LEISURE AND RECREATION**

(30) Priority: 02.11.2020 ES 202000508 U
(71) Applicant: Rodriguez Da Costa, Ivan Heri, 35009 Las Palmas de Gran Canaria (ES); Vazquez Diaz, Jose Maria, 35009 Las Palmas de Gran Canaria (ES); Jimenez Garcia, Armide, 35009 Las Palmas de Gran Canaria (ES)
(72) Inventor: Jimenez Garcia, Armide, 35009 Las Palmas de Gran Canaria (ES)
(74) Representative: Del Valle Valiente, Sonia
(86) International application number: PCT/ES2021/070660
(87) International publication number: WO 2022/090593

(57) **Abstract**

The invention relates to an adapted float-vehicle for leisure and recreation which takes the form of a wheeled trailer (2) with or without a tractor unit, comprising the following adaptations for persons with reduced mobility: at least one access ramp (3), a system of extendable platforms (4) that can be used to extend the useful surface of the vehicle (1) when in a static position, and at least one adapted bathroom (5) with a turntable (6) in the floor. The turntable (6) of the adapted toilet (5) is preferably a circular plate with a diameter of 1 m. And the adapted toilet (5) is approximately the same width as the turntable (6), so that the turntable occupies almost the entire width thereof.

## Description

### OBJECT OF THE INVENTION

The invention, as stated in the title of the present specification, relates to an adapted float-vehicle for leisure and recreation which contributes, to its intended use, advantages and features which are described in detail further on and imply an improvement in the current state of the art.

More particularly, the object of the invention focuses on a float-type vehicle which, notably intended for night or daytime leisure, is adapted for disabled persons or persons with reduced mobility, which vehicle, being of the type that, in motion, carries out a leisure activity with people inside, and where it is also possible to reach a given location with the vehicle, also with the disabled customers on board, to park and continue their activity, in private locations or urban roads, always without prejudice to existing laws and without prejudice to municipal ordinances in terms of traffic and circulation regulations, use of certain roads, etc., where it is possible to set up armchairs in certain areas, projecting music to the interior or exterior, or to both areas at the same time, as well as lighting systems. The vehicle having the particularity of having, in addition to access ramps for wheelchairs or other vehicles used by persons with reduced mobility, a system of extendable platform on the floor of the levels set up for customers so that, once the vehicle is at a static point, it can be deployed and its useful surface can be increased, as well as at least one adapted bathroom with a turntable that provides this condition thereto so as to allow the use thereof by persons with reduced mobility, but occupying much less space than conventional adapted bathrooms.

### FIELD OF APPLICATION OF THE INVENTION

The field of application of the present invention falls within the sector of the industry dedicated to the manufacture of special vehicles, focusing particularly on the field of float-type vehicles or the likes.

### BACKGROUND OF THE INVENTION

The existence of vehicles similar to these characteristics is known and they usually consist of vehicles defined, according to their technical data sheet, as fairground vehicles or mobile stage, with said concept encompassing fair attractions that move, in a closed manner, to a fixed point where they finally carry out their commercial activity or mobile stage, the latter consisting of a stage that moves without activity to a fixed point where show is performed following deployment of the stage also with a static location.

Thus, vehicles in which events can be carried out on board the vehicles in motion in periods other than carnivals or gay pride parades or other recognized periods, where the vehicles circulate along a limited route demarcated by fences and personnel of the state security forces and corps, civil protection and firefighters, and where this can be performed at a reduced speed on roads in urban centers, are not known.

On the other hand, the types of vehicles known as fairground vehicles or mobile stages do not perform any of their activities in motion, with people or customers therein.

Furthermore, given their very limited available space as a result of having to adhere to the dimensions that allow them to circulate on the roads, vehicles of this type are not usually suitable for use by persons with reduced mobility, since, in addition to access ramps, they need more space to be able to move around the useful areas, and particularly they need more space to be able to move around in the toilets.

Therefore, the objective of the present invention relates to the development of an improved float-type vehicle which, in addition to being able to be used by any person, can also be used by persons with reduced mobility who use wheelchairs to move around, preventing them from being marginalized, for which the invention is particularly adapted with advantageous improvements and features.

On the other hand, and as a reference to the current state of the art, it should be pointed out that, although the applicant is aware that vehicles with similar characteristics are currently being built under the nomenclature of fairground vehicles and mobile stages, the existence of a vehicle having the same or similar technical and structural features as those of the vehicle claimed herein is unknown.

### DESCRIPTION OF THE INVENTION

The adapted float-vehicle for leisure and recreation that the invention proposes is thus configured as a notable novelty within its field of application, since according to its implementation and in an exhaustive manner, the objectives indicated above as ideal are satisfactorily achieved, with the characterizing details that make it possible and that differentiate it being included in the final claims that accompany this description.

Specifically, as stated above, the invention proposes a float-type vehicle which, notably intended for day or night leisure and being of the type that, in motion, carries out a leisure activity with people inside, and where it is also possible to reach a given location with the vehicle in order to continue with said activity, either in private locations or urban roads, always without prejudice to existing laws and without prejudice to municipal ordinances, where said activity may consist of discotheque or the like, and where it is possible to set up, for example, a bar counter, armchairs in certain areas, projecting music to the interior or exterior, or to both areas at the same time, as well as lighting systems.

Said vehicle, essentially made up of a trailer, which may or may not be equipped with a tractor unit, is essentially distinguished by the fact that it is adapted to be used by disabled persons or persons with reduced mobility, particularly people who move around in wheelchairs, for which, in addition to access ramps for wheelchairs or other vehicles used by persons with reduced mobility, it is equipped with a system of extendable platforms that extend the floor space of the floors set up for the customers, so that, once the vehicle is at a static point, they can be deployed and their useful surface can be increased, as well as with at least one adapted bathroom that, unlike conventional adapted bathrooms having very large dimensions so as to allow turning with a wheelchair therein, is equipped with a turntable that provides this condition, allowing the use thereof by persons with reduced mobility since they can turn with the chair on said platform in very little space.

In addition to this, the vehicle is adapted to other essential requirements, such as height of handrails, steps, materials, active and passive safety components.

Likewise, the vehicle applies the system of extendable platforms in the compartment for the generator set that provides electrical power for all its equipment, in the exterior loudspeaker area, to facilitate work of repairing and maintaining these systems.

Preferably, the system of extendable platforms is preferably configured from plates which are stowed away in and come out from under the floor of the vehicle, being moved by means of bearings, guides, or a hydraulic mechanism.

All this enables an optimal surface in motion and at standstill, implementing social distance between customers and mobility of customers in wheelchairs, once the vehicle is stopped and the system of platforms is deployed.

It is important to note that the electrical installation, the running water system, and the metal structures, design, thicknesses, and dimensions of the materials will be suitably studied to support the function for which they are intended with total safety.

There is a need to into account the different designs of these vehicles, which can be one level with a roof, one half-closed level, or two levels, and being able to be built on different platforms, such as low loader- or gooseneck-type trailers or container loading plates.

Preferably, the vehicle will have at least one bar and two bathrooms, one of said bathrooms being adapted for the disabled, both on the lower level of the vehicle, as well as an automatic fire extinguishing system in the space of the compartment intended for housing the generator set, with the system being advisable to be a diesel fuel system, a storage area, as well as one fire extinguisher per level, as well as fire blankets.

The location of bathrooms, bars, warehouse, will take into account the interior design that is to be carried out for the float.

Furthermore, the vehicle will have mobile illumination elements in the interior and exterior, as well as sound elements that are directed towards the interior or interior dance areas in the vehicle and towards the exterior.

It can have a surface set up for a DJ or for placing sound tables in a separate location from the customers.

Likewise, the exterior claddings of the mobile discotheque float can be made of metallic materials, marine plywood, Alucobond, where screens projecting advertisements, videos, photos can be arranged towards the outside.

In this way, the operation of the vehicle also adapted for the disabled or for persons with reduced mobility would be such that, for example, once the customers are on board, they can enjoy the services of a bar, terrace, or discotheque, while the vehicle circulates on urban roads, previously established at a reduced speed, and reporting the itinerary to be followed to the local police and the competent town hall.

The customers would be able to enjoy music (live, DJ, or recordings), consume beverages, savor pre-cooked catering food (the vehicle would not have a kitchen to avoid heat sources that may maximize the possibility of fires), use bathrooms, etc.

### DESCRIPTION OF THE DRAWINGS

To complement the description provided herein, and for the purpose of helping to make the features of the invention more readily understandable, said description is accompanied by a set of drawings constituting an integral part of the same, which by way of illustration and not limitation represents the following:

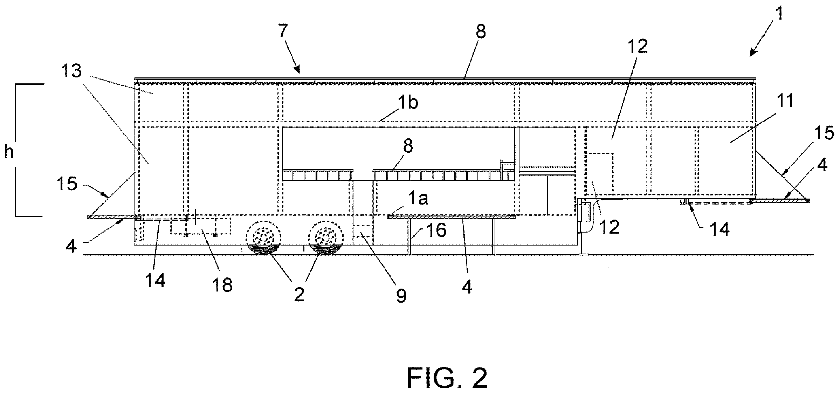

Figures 1 and 2 show respective schematic plan and elevational views, respectively, of an embodiment of the adapted float-vehicle for leisure and recreation object of the invention, in which its general configuration and the main parts and elements that it comprises can be seen.
Figures 3 and 4 show respective plan views of the access ramp that the vehicle of the invention has, depicted respectively in the deployed and folded position.
Figures 5 and 6 show respective side elevational views of the access ramp that the vehicle of the invention has, depicted respectively in the folded and deployed position.
Figure 7 shows a schematic perspective view of an example of the rear extendable platform, provided with a system of braces.

And Figures 8 and 9 show respective schematic perspective views of an example of the side extendable platforms, provided with support legs, depicted respectively in the use position and in the retracted position.

### PREFERRED EMBODIMENT OF THE INVENTION

In view of the mentioned figures and in accordance with the adopted numbering, a non-limiting example of the adapted float-vehicle for leisure and recreation of the invention can be seen therein, which float-vehicle comprises what is described in detail below.

Thus, as can be seen in said figures, the vehicle (1) in question, which preferably takes the form of a wheeled trailer (2) with or without a tractor unit, is essentially distinguished by comprising the following adaptations for persons with reduced mobility: at least one access ramp (3), a system of extendable platforms (4) that can be used to extend the useful surface of the vehicle (1) in a static position, and at least one adapted bathroom (5) for said persons with reduced mobility with a turntable (6) in the floor.

In a preferred embodiment, the vehicle (1) has external dimensions of approximately between 9 meters and 13.60 meters in length (I), not counting the length of the vehicle used as a tractor unit, where the length of the articulated vehicle (hub and trailer) cannot exceed 16.60 meters, with a width (a) of approximately 2.50 meters, and a total height (h) of no more than 4 meters, for circulation without people on interurban roads, all of which being built with a metal structure that makes up the design thereof.

Optionally, the roof (7) of the vehicle is equipped with collapsible handrails (8), which allows the use thereof by people in said area of the roof (7), in which case, the height thereof is about 4.50 meters with the handrails (3) extended without people, and 5.10 meters with people.

Preferably, the inner height of the vehicle (1) ranges between 1.90 m and 2.20 meters when the vehicle is covered, notwithstanding that a greater height as long as the roof thereof is no more than 4 meters in height from the pavement.

Preferably, the handrails (8), which comprise the perimeter of the structure of the different levels of the vehicle, for example two levels, i.e., a lower level (1a) and another upper level (1b), in addition to the roof (7), as well as stairs (9) and accesses, are built in a rigid and stable material, with a height of between 0.90 cm and 120 cm.

Preferably, if there is a free space between the upper part of the handrail (8) and the floor of the level that is not covered by a solid structure, there will be envisaged the existence of an intermediate safety bar to prevent people and objects from falling through said space, in addition to a skirting board of at least 10 cm in height to prevent glasses and other objects that are on the floor from falling onto public roads.

In any case, preferably, the stairs (9) and accesses have a passage width of at least between 60 cm and 80 cm, are illuminated, and have non-slip elements (not depicted) which are preferably also applied in the rest of the useful surface of the vehicle (1).

In the preferred embodiment, the vehicle has at least one access stairs (9) formed by steps with treads of between 20 cm and 26 cm and riser of between 13 and 20 cm.

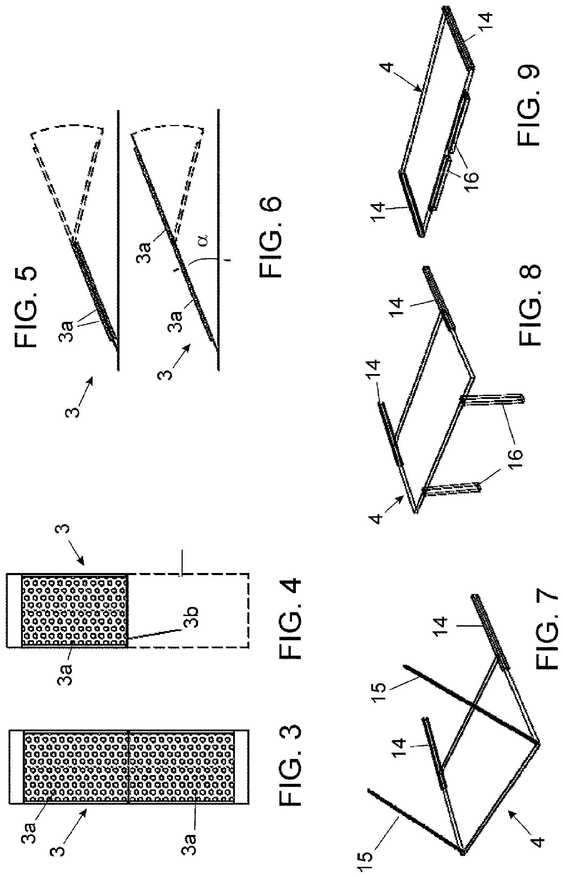

In turn, the access ramp (3) for persons with reduced mobility in wheelchairs has a width (a) of at least one meter fifty centimeters, and in the position of use, a degree of inclination of at most a 22° angle (α) with respect to the floor, as shown in Figures 5 and 6, suitable to make access possible for said people, so the length thereof will depend on the height of the vehicle floor. In any case, said ramp (3), as can be seen in Figures 3 to 6, is preferably formed by two plate segments (3a) that can be folded together, for example by means of a hinge (3b), which are furthermore retractable into the structure of the vehicle such that it is stowed away when the vehicle is moving and extended for use when the vehicle is stopped.

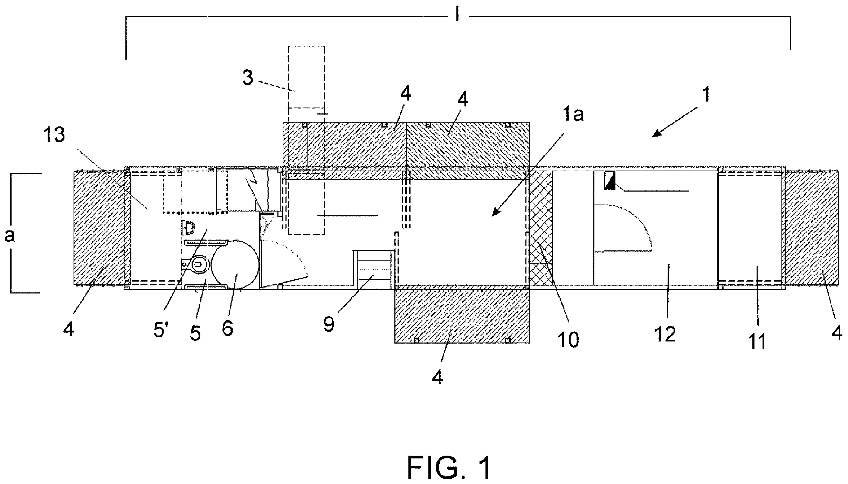

In turn, as can be seen in Figure 1, preferably, the vehicle preferably has two bathrooms (5, 5'), of which at least one is an adapted bathroom (5) with a turntable (6) in the floor for the purpose and the function of being able to turn on itself, given that the dimensions of a bathroom adapted for persons with reduced mobility, wheelchairs, etc., inside a vehicle (1) would occupy too much space, while the other bathroom is a conventional bathroom (5').

Preferably, said turntable (6) of the adapted bathroom (5) is a circular plate with a diameter of 1 m, and preferably said adapted bath (5) is approximately the same width, so that the turntable occupies almost the entire width thereof.

It should be noted that the position and location of the stairs (9) and the access ramp (3) with respect to the vehicle (1) will vary without prejudice to their function if deemed appropriate.

As mentioned, the vehicle can have different designs, which can be one level with a roof, one half-closed level, or two levels, and being able to be built on different platforms, such as low loader- or gooseneck-type trailers or container loading plates.

In the preferred embodiment, the vehicle (1) has at least one bar counter (10) and two bathrooms, one disabled bathroom (5) with the aforementioned turntable (6) and another conventional bathroom (5'), both in the lower level (1a) of the vehicle (1), as well as an automatic fire extinguishing system integrated in the space of the compartment intended for housing the generator set (11), with the system being advisable to be a diesel fuel system, in addition to a fire extinguisher per level, as well as fire blankets. Furthermore, the vehicle (1) also comprises a storage area (12).

In any case, the location of the bathrooms (5, 5'), bars (10), warehouse (12) will take into account the interior design that is to be carried out for the float constituting the vehicle (1) in each case.

Preferably, the vehicle (1) further comprises mobile lighting elements (not depicted) in the interior and exterior, as well as sound elements (13) directed towards the interior or interior dance areas of the vehicle and towards the exterior, where the vehicle can have a surface set up for a DJ or for placing sound tables in a separate location from the customers.

In turn, the exterior claddings of the vehicle (1) which is constituted as a mobile discotheque float can be made of metallic materials, marine plywood, Alucobond, where one or more screens (not depicted) projecting advertisements, videos, photos can be installed towards the outside.

Optionally, the vehicle (1) which, as indicated, has a generator set (11) that powers the low-voltage electrical system, can incorporate Wi-Fi, to facilitate the payment system using dataphones.

In any case, the system of extendable platforms (4) comprised in the vehicle (1) of the invention that can be used to extend the useful surface thereof in a static position preferably comprises at least one extendable platform (4) on each of both sides and in the rear part of the main level or lower level of the vehicle (1), where there can be optionally two or more contiguous platforms on one or both sides which, in any case, are preferably made up of a rectangular plywood which, in the stowed-away position, is located under the floor of the vehicle (1), and is placed in the extended position by means of guides (14) provided for this purpose, as shown in Figures 7 to 9, being suspended as a result of support means that are made up, for example, of flexible braces (15) in the form of a chain or the like, as shown in the example of Figure 7, or by folding legs (16), as shown in the example of Figures 8 and 9.

In the preferred embodiment, the extendable platforms (4) have a length equal or similar to the width (a) of the vehicle and a width of approximately 1 m. Furthermore, one and the same vehicle may comprise several extendable platforms (4) of variable dimensions.

Furthermore, preferably, the vehicle also comprises an extendable platform (4) located in the area of the space of the generator set (11), in order to have full access to the engine in the event of a breakdown, without the need to lower it to the ground with a forklift.

Logically, the vehicle (1) is suitably equipped with at least one clean water tank (17) and one or two dirty water tanks (18), with the corresponding installation of pipes (not depicted).

Optionally, the vehicle can include balconies (not depicted) on its exterior part, with security crosspieces and through bolts, to set up, for example, a DJ area or part of the bar.

Finally, it should be mentioned that, although not depicted, when the vehicle has two levels, i.e., a lower level (1a) and an upper level (1b), the stairs for accessing the second level can be located in the interior front part of the vehicle or in the interior rear part, depending on the configuration to be given to the interior of the vehicle, on the location of bars, warehouse, bathrooms, etc.

Having sufficiently described the nature of the present invention, as well as the ways of implementing same, it is not considered necessary to extend its explanation for any person skilled in the state of the art to understand its scope and the advantages which derive from it, stating that it may be implemented in other embodiments that differ in detail from that indicated by way of example provided the fundamentals are not modified.

## Claims

1. An adapted float-vehicle for leisure and recreation which takes the form of a wheeled trailer (2) with or without a tractor unit, **characterized by** comprising the following adaptations for persons with reduced mobility: at least one access ramp (3), a system of extendable platforms (4) that can be used to extend the useful surface of the vehicle (1) when in a static position, and at least adapted one bathroom (5) with a turntable (6) in the floor.

2. The adapted float-vehicle for leisure and recreation according to claim 1, **characterized in that** said turntable (6) of the adapted bathroom (5) is a circular plate with a diameter of 1 m.

3. The adapted float-vehicle for leisure and recreation according to the preceding claims, **characterized in that** the adapted bathroom (5) is approximately the same width as the turntable (6), so that the turntable occupies almost the entire width thereof.

4. The adapted float-vehicle for leisure and recreation according to the preceding claims, **characterized in that** the access ramp (3) for persons with reduced mobility in wheelchairs has a width (a) of at least one meter fifty centimeters, and in the position of use, a degree of inclination of at most 22° angle (α) with respect to the floor.

5. The adapted float-vehicle for leisure and recreation according to the preceding claims, **characterized in that** the ramp (3) is formed by two plate segments (3a) that can be folded together which, moreover, are retractable into the structure of the vehicle.

6. The adapted float-vehicle for leisure and recreation according to the preceding claims, **characterized in that** it has external dimensions of approximately between 9 meters and 13.60 meters in length (l), a width (a) of approximately 2.50 meters, and a total height (h) of no more than 4 meters.

7. The adapted float-vehicle for leisure and recreation according to the preceding claims, **characterized in that** the system of extendable platforms (4) that can be used to extend the useful surface of the vehicle in a static position comprises at least one extendable platform (4) on each of both sides and in the rear part of the main level or lower level of the vehicle (1).

8. The adapted float-vehicle for leisure and recreation according to the preceding claims, **characterized in that** the system of extendable platforms (4) comprises two or more contiguous extendable platforms (4) on one or both sides of the vehicle.

9. The adapted float-vehicle for leisure and recreation according to the preceding claims, **characterized in that** the extendable platforms (4) are formed by a rectangular plywood which, in the retracted position, is located under the floor of the vehicle (1) and is placed in the extended position by means of guides (14), remaining suspended as a result of support means.

10. The adapted float-vehicle for leisure and recreation according to claim 9, **characterized in that** the support means of the extendable platforms (4) consist of braces (15) in the form of a chain or the like.

11. The adapted float-vehicle for leisure and recreation according to claim 9, **characterized in that** the support means of the extendable platforms (4) consist of folding legs (16).
